**Europäisches Patentamt**

**European Patent Office**

**Office européen des brevets**

(19)

(11) **EP 1 531 562 A2**

(12) **EUROPEAN PATENT APPLICATION**

(43) Date of publication:
18.05.2005 Bulletin 2005/20

(51) Int Cl.⁷: **H04B 7/26**

(21) Application number: **04027077.9**

(22) Date of filing: **15.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **15.11.2003 KR 2003080886**

(71) Applicant: **Samsung Electronics Co., Ltd.
Suwon-si, Gyeonggi-do (KR)**

(72) Inventors:
• **Han, Jeong-Hoon,
c/o Samsung Electronics Co., Ltd.
Suwon-si Gyeonggi-do (KR)**

• **Shin, Kyo-Sook,
c/o Samsung Electronics Co., Ltd.
Suwon-si Gyeonggi-do (KR)**
• **Lee, Hyun-Bae,
c/o Samsung Electronics Co., Ltd.
Suwon-si Gyeonggi-do (KR)**

(74) Representative: **Lang, Johannes, Dipl.-Ing.
Bardehle Pagenberg Dost Altenburg Geissler,
Postfach 86 06 20
81633 München (DE)**

(54) **Appartaus and method for data rate transmission of user equipment in mobile communication system**

(57) Disclosed is a method for transmitting control information from a UE to a Node B in a mobile communication system including the UE and the Node B which transmit and receive high-speed data and control information corresponding thereto. In such a method, only usable control information from among the control information under the management of the UE is extracted, and identifiers corresponding to the respective extracted control information is reset. Also, an identifier corresponding to the control information used for the data transmission from among the reset identifiers is selected, and the selected identifier is transmitted.

FIG.6

**Description**

**BACKGROUND OF THE INVENTION**

Field of the Invention:

The present invention relates to data transmission over a mobile communication system. More particularly, the present invention relates to an apparatus and a method for scheduling a data rate to be used when a user equipment (UE) transmits data to a base station (Node B) and for transmitting control information corresponding to the scheduled data rate.

Description of the Related Art

A Code Division Multiple Access (hereinafter referred to as CDMA) mobile communication system, which is one example of widely-used mobile communication systems, originated from an IS-95 standard mainly for transmission and reception of voice signals and is now developing into an IMT-2000 standard for transmission not only of voice signals but also of high speed data. Particularly, the IMT-2000 standard focuses on services such as high quality voice reproduction, moving image reproduction, Internet surfing service, etc.

In a CDMA mobile communication system network, when a new UE accesses the network, a maximum data transmission speed allowable to the UE is determined in consideration of a reception signal level and noise rise of each UE and the new UE accessing the network is notified of the maximum data transmission speed. Then, the UE considers the notified maximum data transmission speed, the quantities and priorities of data to be transmitted in determining a transmission speed and sets the optimal transmission speed within the maximum data transmission speed. The UE transmits the data using the set optimal transmission speed.

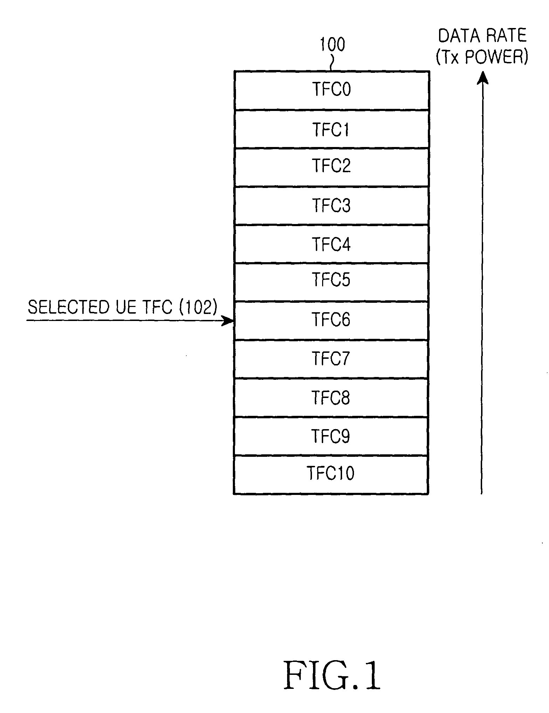

FIG. 1 illustrates a Transport Format Combination Set (TFCS), which a Radio Network Controller (RNC) assigns to a UE belonging to a Node B within its jurisdiction in consideration of interference levels between the multiple Node Bs controlled by it.

The TFCS defines a transmission format which the UE can use for transmitting data, such as, data rate and so on. In FIG. 1, the TFCS 100 includes Transport Format Combination 0 to 10 (TFC0 to TFC10). TFC0 represents the highest data transmission speed and TFC10 represents the lowest data transmission speed. The UE selects a TFC in consideration of the assigned TFCS, buffer occupancy, which is the quantity of data to be transmitted, and a maximum transmission power (Max_Tx_Pwr). FIG. 1 shows that the UE has selected TFC6 as indicated by arrow 102. As described above, the UE itself determines its data transmission speed through scheduling based on the TFCS assigned to it.

In a case where the UE spontaneously determines the TFC, the RNC inevitably consumes a large amount of time in reflecting changes in noise rise of the Node Bs belonging to a cell under its jurisdiction. The longer the time taken in reflecting the changes in noise rise of the Node Bs, which changes instantaneously, the more difficult it is to exactly reflect the changed noise rise in the TFCS to be transmitted to a new UE accessing a Node B under the jurisdiction of the RNC.

Further, for packet data having a burst data transmission characteristic, noise rise variance is larger than that of voice data. In addition, since the UE spontaneously determines the TFC, the amount of variation in the noise rise (such as, noise rise variance) of the Node B is further increased.

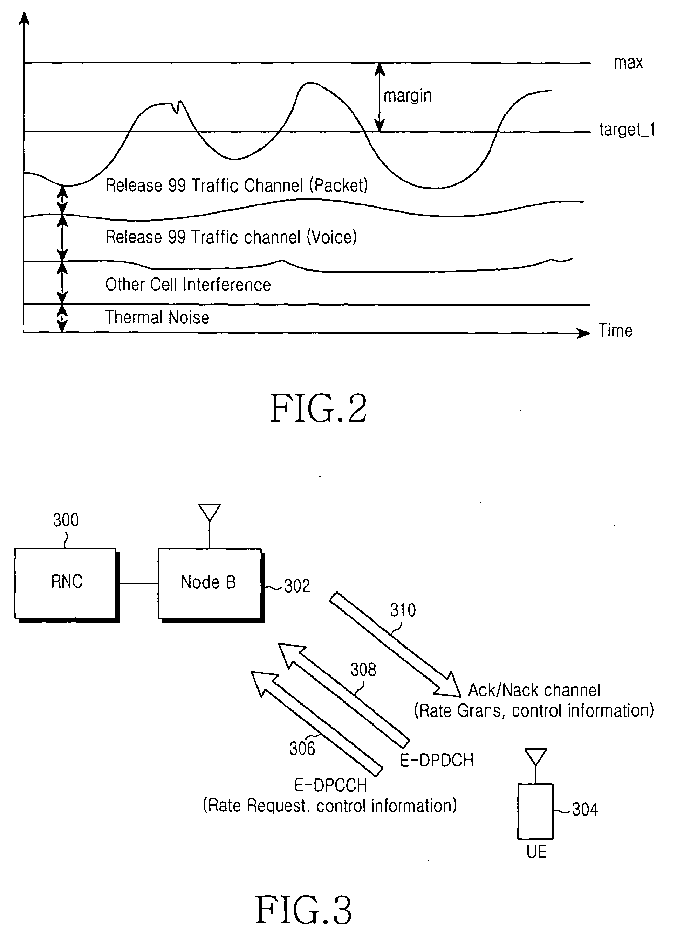

FIG. 2 illustrates exemplary noise rise variance of the Node B with the passage of time. As shown in FIG. 2, the interference components of the Node B are classified into thermal noise, the interference component of other Node Bs, the interference component by a voice channel, and the interference component by a packet channel. Variance in the thermal noise, the interference component of other Node Bs, or the interference component by a voice channel is very small, so the amounts of variation in them are predictable with respect to time. However, it is not possible to exactly predict the amount of variation in the interference component by a packet channel because it has such a large variance with the passage of time. That is, it is noted that the noise rise variance of the Node B is determined mainly by the amount of variation in the interference component by a packet channel.

In FIG. 2, 'max' signifies a maximum allowable interference level and 'target_1' signifies a target interference level reflecting variance of the interference level according to time. Also, 'margin' is the difference between the maximum allowable interference level and the target interference level. The 'margin' is determined according to the variance of the interference level. In other words, because the total sum of noise rise is not allowed to exceed the value of 'max' in scheduling, the 'margin' must be increased in proportion to the noise rise variance when the noise rise variance is large.

Hereinafter, the noise rise will be discussed. The noise rise can be expressed by the following equation:

$$Noise\_rise = \frac{I_{or} + I_{oc} + N_t}{N_t} \qquad \text{Equation (1)}$$

In equation (1), $I_{or}$ represents power of reception signals transmitted from UEs located in a specific cell, $I_{oc}$ represents power of reception signals transmitted from UEs located in other cells, and $N_t$ represents power of noise.

As described above, in all mobile communication systems including CDMA, the interference component by a packet channel has large variance of the interference level due to a nature of packet data and thus the 'margin' is also large. In such a situation, the fact that each UE determines by itself the data transmission speed causes an increase of the noise rise variance, thereby increasing the 'margin'. This implies that the power which the Node B can assign for each UE is reduced as the 'margin' increases. In conclusion, the waste of radio resources increases as the 'margin' increases.

FIG. 3 is a block diagram for illustrating general particulars of an uplink data transmission from a UE to a Node B. The system shown in FIG. 3 includes an RNC 300, a Node B 302 and a UE 304. The UE 304 requests data rate and control information to the Node B 302 through an Enhanced Dedicated Physical Control Channel (E-DPCCH) as shown by arrow 306. The Node B 302 transmits the control information and the data rate in response to the request of the UE 304 as shown by arrow 310. Specifically, the RNC 300 determines the control information and the data rate and then transmits them to the UE 304 by way of the Node B 302. The UE 304 transmits data using the data rate and the control information received from the RNC 300 as shown by arrow 308. At this time, the data is transmitted through an Enhanced Dedicated Physical Data Channel (E-DPDCH).

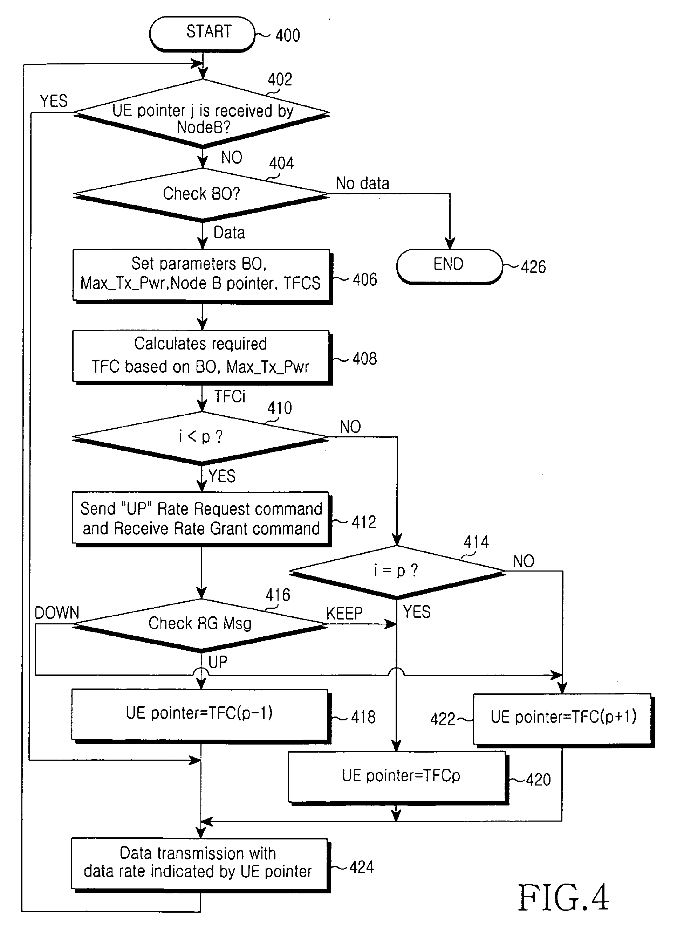

FIG. 4 illustrates a determining process of a TFC by a UE.

In step 402, the UE decides whether or not a UE pointer j has been received from the Node B. If the UE pointer j has been received, the process passes to step 424. If the UE pointer j has not been received, the process passes to step 404.

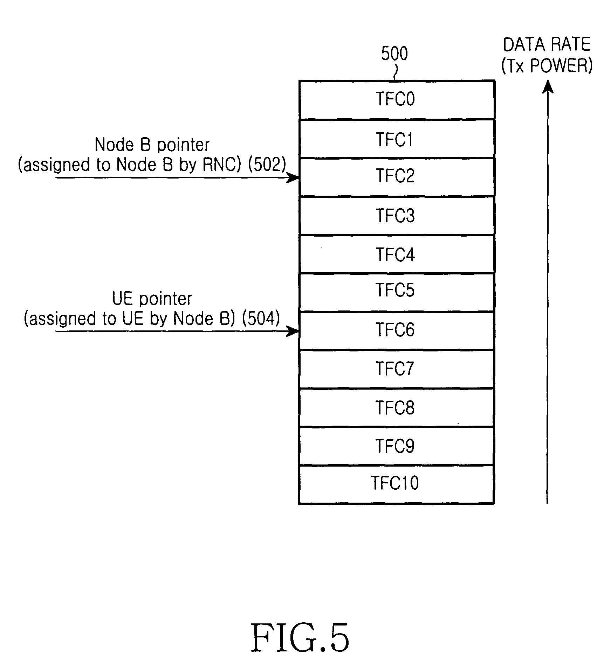

Hereinafter, a Node B pointer and the UE pointer j will be described with reference to FIG. 5. The Node B pointer 502 refers to a TFC within the TFCS 500, which an RNC assigns and transmits to a specific Node B belonging to a cell under its jurisdiction. The UE pointer j 504 refers to a TFC, which the Node B assigns to the UE in consideration of the TFCS transmitted from the RNC, a received interference level, etc. Here, the UE may select a TFC within the UE pointer j 504 and transmit data by means of the UE pointer j. Referring back to FIG: 4, at the initial stage of transmission, the UE proceeds to step 404 from step 402 to execute the relevant operation.

In step 404, the UE checks the buffer occupancy. When the buffer contains data to be transmitted, the UE proceeds to step 406. When the buffer contains no data to be transmitted, the UE proceeds to step 426 and terminates the process. In step 406, the UE sets the buffer occupancy, the maximum transmission power, the Node B pointer 502 and TFCS 500.

In step 408, the UE checks the buffer occupancy at a certain time interval in the course of the data transmission. The UE may report the buffer occupancy to the Node B. The UE determines an optimal data rate in consideration of the maximum transmission power and the quantity of data stored in the buffer. The UE also calculates a TFC corresponding to the determined data rate from the TFCS. The selected TFC is set as TFCI.

In step 410, the UE compares the TFC corresponding to the data rate of current transmission with the TFC selected in step 408. A level of the TFC corresponding to the data rate of the current transmission is designated by 'p' in step 410, while the TFC selected is designated as 'i'. Referring to FIG. 5, p has one value from 2 to 10. The reason why p may not have a value of 0 or 1 is that data cannot be transmitted at data rate higher than that assigned to the Node B. As a result of the comparison, the UE proceeds to step 412, if i is larger than p, and proceeds to step 414, if i is not larger than p.

In step 412, the UE requests the Node B to assign data rate higher ('UP') than the current data rate by one rank and receives a response to the request. In consideration of a reception interference level, the Node B decides whether or not it assigns the data rate requested by the UE (rate grant response). The UE checks the response from the Node B in step 416. According to the result of the check of the rate grant message, the UE executes step 422 when information "DOWN" has been received and executes step 420 when information "KEEP" has been received. The UE executes step 418 when information "UP" has been received.

In step 414, the UE decides whether or not i is equal to p. According to the result of the comparison between i and p, the UE executes step 420 when i and p are equal to each other and executes step 422 when i and p are not equal to each other.

In step 418, the UE lowers the rank of the current TFC by one. In step 420, the UE maintains the current TFC. In step 422, the UE raises the rank of the current TFC by one. Table 1 shows an example of the result by the process executed from step 418 to step 422.

Table 1

| Current TFC | Step 418 | Step 420 | Step 422 |
|---|---|---|---|
| TFC 6 | TFC 5 | TFC 6 | TFC 7 |

In step 424, the UE transmits data stored in the buffer at the data rate corresponding to the TFC set in one of steps 418, 420, and 422, which is indicated by the UE pointer.

As stated above, the UE transmits data stored in the buffer at the data rate corresponding to the set TFC and simultaneously transmits the Transport Format Combination Indicator (TFCI) to the Node B so that the Node B can decode the data transmitted from the UE. The TFCI is generally composed of 10 bits, that is, has 1024 ($2^{10}$) expressions. Also, the TFCI is updated every 10 ms and is transmitted at a Transmission Time Interval (TTI).

However, a method by which the UE transmits the TFCI has not been standardized. Further, there has occurred a problem of wasting limited radio resources owing to the transmission of a 10-bit length TCFI.

SUMMARY OF THE INVENTION

Accordingly, the present invention has been made to solve at least the above-mentioned problems occurring in the prior art, and an object of the present invention is to provide an apparatus and a method for reducing the number of bits expressing information at the data rate at which a UE transmits data to a Node B.

It is another object of the present invention to provide an apparatus and a method for reducing a transmission time period for information at the data rate at which a UE transmits data to a Node B.

It is another object of the present invention to provide an apparatus and a method for efficiently managing radio resources by excluding unnecessary information in the transmission of information at the data rate at which a UE transmits data to a Node B.

In order to accomplish these objects, there is provided a method for transmitting control information from a UE to a Node B in a mobile communication system including the UE, which transmits data and the Node B, which restores received data using the control information stored therein, and corresponding to an identifier transmitted by the UE, the method comprising the steps of extracting only usable control information from among the control information under the management of the UE and resetting identifiers corresponding to the respective extracted control information; and selecting an identifier corresponding to the control information used for the data transmission from among the reset identifiers and transmitting the selected identifier.

In accordance with another aspect of the present invention, there is provided a method for transmitting control information from a UE to a Node B in a mobile communication system including the UE, which transmits data, and the Node B, which restores received data using the control information stored therein, and corresponding to an identifier transmitted by the UE, the method comprising the steps of dividing the respective identifiers corresponding to the control information to be transmitted into a section, which is changed and then transmitted, and a section, which is transmitted without changing; and transmitting only the changed section accompanied with the identifiers corresponding to the control information to be transmitted.

In accordance with another further aspect of the present invention, there is provided an apparatus for transmitting control information from a UE to a Node B in a mobile communication system including the UE, which transmits data, and the Node B, which restores received data using the control information stored therein, and corresponding to an identifier transmitted by the UE, the apparatus comprising the Node B; and the UE for extracting only usable control information from among the control information under its management, resetting identifiers corresponding to the respective extracted control information, selecting an identifier corresponding to the control information used for the data transmission from among the reset identifiers and transmitting the selected identifier.

In accordance with still another further aspect of the present invention, there is provided an apparatus for transmitting control information from a UE to a Node B in a mobile communication system including the UE, which transmits data, and the Node B, which restores received data using the control information stored therein, and corresponding to an identifier transmitted by the UE, the apparatus comprising the Node B; and the UE for dividing the respective identifiers corresponding to the control information to be transmitted into a section, which is changed and then transmitted, and a section, which is transmitted without changing, and transmitting only the changed section accompanied with the identifiers corresponding to the control information to be transmitted.

BRIEF DESCRIPTION OF THE DRAWINGS

The above and other objects, features and advantages of the present invention will be more apparent from the following detailed description taken in conjunction with the accompanying drawings, in which:

FIG. 1 illustrates a structure of a typical Transport Format Combination Set (TFCS);

FIG. 2 illustrates various types of interference signals and magnitudes thereof generated in a conventional mobile communication system;

FIG. 3 is a block diagram for illustrating a conventional signaling between a UE and a Node B proposed in order to reduce interference signals;

FIG. 4 is a flowchart of a conventional process for determining a data rate in a UE to which the present invention is applied;

FIG. 5 illustrates a structure of a TFCS transmitted to the UE shown in FIG. 4;

FIG. 6 illustrates a structure of a TFCS in a case of assigning a Transport Format Offset (TFO) in accordance with an embodiment of the present invention;

FIG. 7 illustrates an exemplary structure of a TFCS in a case of assigning a TFO when a UE point is changed according to an embodiment of the present invention;

FIG. 8 illustrates a structure of a TFCS in which a TFO is differently assigned in relation to FIG. 7;

FIG. 9 illustrates a structure of a 10-bit length TFC to which an embodiment of the present invention is applied;

FIG. 10 illustrates an example of generating control information in accordance with an embodiment of the present invention;

FIG. 11 illustrates another example of generating control information in accordance with an embodiment of the present invention;

FIG. 12 illustrates further another example of generating control information in accordance with an embodiment of the present invention; and

FIG. 13 is a block diagram for illustrating a transmission structure of a UE in accordance with an embodiment of the present invention.

## DETAILED DESCRIPTION OF THE EXEMPLARY EMBODIMENTS

Hereinafter, the preferred embodiments of the present invention will be described with reference to the accompanying drawings. In the following description, a detailed description of known functions and configurations incorporated herein will be omitted for the sake of clarity.

From now on, information on data rate in the present invention will be referred to as a Transport Format Combination Indicator (TFCI).

Embodiments of the present invention propose a method for transmitting a TFCI using smaller bits when a UE transmits the TFCI through a control channel for a reverse packet dedicated channel and a correspondent method that enables a Node B to exactly detect the TFCI transmitted from the UE.

In a preferred embodiment, the UE assigns only a TFC lying within a transmittable range with regard to reverse data transmission as a new identifier, that is, an offset, and transmits it through the control channel.

In another preferred embodiment, the UE divides a TFC determined with regard to the reverse data transmission into effective information and ineffective information and transmits only the effective information.

Example 1

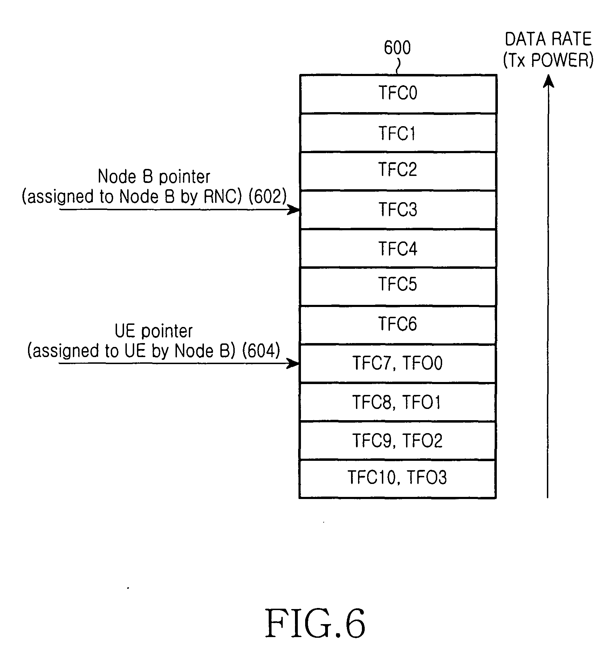

FIG. 6 illustrates a scheme of assigning a Transport Format Offset (TFO) in accordance with an embodiment of the present invention.

Referring to FIG. 6, a UE is placed in a state that it has received an entire TFCS 600 with regard to reverse data transmission. The TFCS 600 includes TFC0 to TFC10. TFC0 represents the highest data transmission speed and TFC10 represents the lowest data transmission speed. TFC3 is set as a Node B pointer 602 and TFC7 is set as a UE pointer 604.

Consequently, the UE can use only the data rate corresponding to TFC7 to TFC 10 which are in a range equal to and below the UE pointer 604 (in other words, the UE pointer range). TFC0 to TFC6 cannot be used as data rate for the reverse data transmission until the UE pointer 604 is changed.

Accordingly, the UE determines an optimal data rate within the UE pointer range in consideration of the quantity of data stored in its buffer and maximum transmission power. At this moment, information on the determined TFC is transmitted to the Node B through the control channel. The purpose of this is to enable the Node B to execute a decoding process for the reverse data transmitted from the UE using the TFC, which is selected by the UE.

In transmitting usable information on the TFC for the UE, the UE assigns TFC7 to TFC10 as a 2-bit Transport Format Offset (TFO) based on the UE pointer 604. Hereinafter, a more detailed description will be given with respect to this function.

The existing UE has transmitted the TFC set from among TFC0 to TFC10 using 4 bits. That is, the UE has used 10 bits for transmitting the selected TFC.

However, the UE may practically assign only the TFCs lying in the UE pointer range. Also, the UE has already received the UE pointer 604 from the Node B and thus is placed in a state that it has recognized the UE pointer 604.

Thus, the UE successively assign the TFC based on the UE pointer 604 and transmit it through the control channel. In other words, the UE assigns the TFC such that TFC7 corresponds to TFO0, TFC8 corresponds to TFO1, TFC9 corresponds to TFO2, and TFC10 corresponds to TFO3.

Consequently, the number of bits expressing the control information transmitted from the UE to the Node B is reduced, so the magnitude of interference signal having an effect on other Node B is also reduced. Furthermore, since the reduction in the number of bits expressing the control information transmitted from the UE to the Node B also reduces the transmission period of the control information, the Node B can receive more accurate control information.

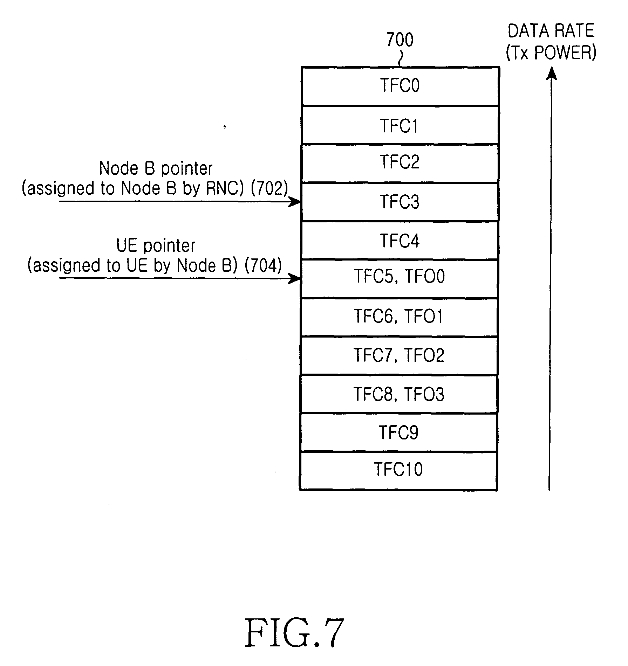

FIG. 7 illustrates a structure of a TFCS in a case of assigning a TFO when a UE point is changed according to an embodiment of the present invention.

Referring to FIG. 7, the Node B transmits an updated TFC from the TFCS 700 to the UE. As compared with FIG. 6, a Node pointer 702 has not been changed, but a UE pointer 704 has been changed in FIG. 7. That is, the UE pointer 704 has been changed from TFC7 to TFC5.

When the UE pointer 704 has been changed from TFC7 to TFC5, the data rate at which the UE may transmit data is one corresponding to TFC5 to TFC10. In other words, the number of bits expressing the TFO in correspondence to TFC5 to TFC10 varies. To give an example, TFC5 can correspond to TFO0 and TFC6 can correspond to the TFO5. In order to distinguish TFO0 to TFO5 from each other, at least 3 bits are needed.

However, if the number of bits the enables the respective TFOs to be distinguished from each other is fixed (for example , 2 bits in relation to FIG. 7), there is a problem in that TFC9 and TFC10 cannot be expressed as TFOs as shown in FIG. 7.

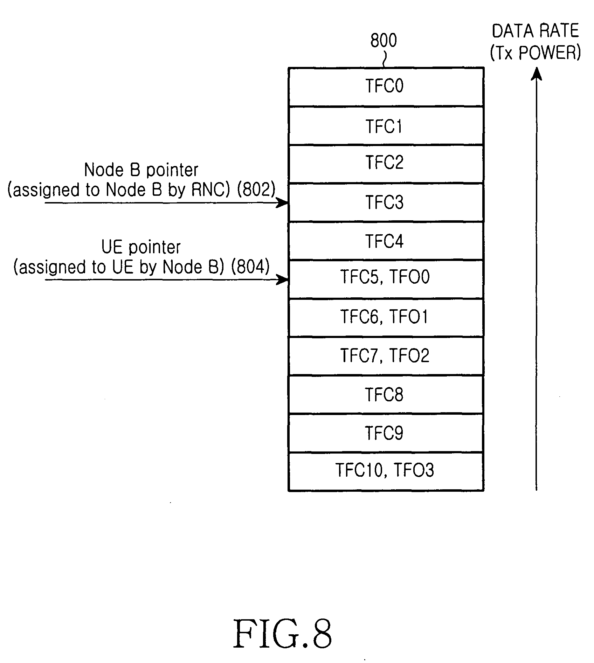

FIG. 8 illustrates a scheme of assigning a TFO in a case like in FIG. 7.

Referring to FIG. 8, if the quantity of data is large, the UE selects the highest transmittable data rate in consideration of a buffer state and a maximum transmission power so as to transmit reverse data. When a UE pointer 804 has been changed from TFC7 to TFC5, the highest data rate at which the UE can transmit data is the UE pointer 804 or a TFC adjacent to the UE pointer 804.

Thus, the UE assigns the TFO such that the TFO corresponds to the TFC adjacent to the UE pointer 804. For example, TFC5 is assigned as TFO0, TFC6 is assigned as TFO1 and TFC7 is assigned as TFO2. Considering the case where there is no data to be transmitted, TFC10 is also assigned as TFO3. That is, the TFO corresponding to the TFC can be determined using information regarding the data rate the UE uses. At this time, the UE measures frequency of use of the TFC and can determine the TFC corresponding to the TFO based on the measured frequency of use.

Furthermore, since a plurality of data having short lengths and sensitivity to delay, such as ACK information of a transmission Control Protocol (TCP),or the like, are expected to exist in data transmitted through a reverse packet dedicated channel, a TFC corresponding to the lowest data rate may be also assigned as the TFO.

Example 2

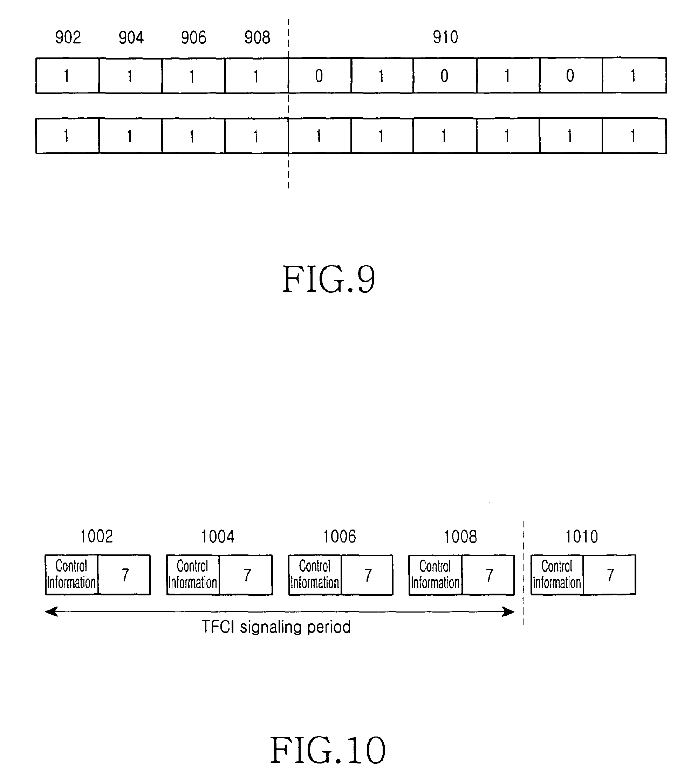

FIG. 9 illustrates a structure of any 10-bit length TFC and FIG. 10 illustrates a scheme of dividing control information into effective information and ineffective information and then transmitting the control information in accordance with an embodiment of the present invention.

Referring to FIG. 9 and FIG. 10, upper 4 bits 902 to 908 of a TFCS expressed in 10 bits are information which is rarely changed. That is, the UE transmits a TFC higher or lower than the previous TFC by one rank. Therefore, the upper 4 bits (902, 904, 906 and 908, respectively) represent ineffective information having little possibility of being changed and 6 lower bits 910 represent effective information having a high possibility of being changed.

Accordingly, the uppermost bit 902, ineffective information, and the lower 6 bits 910, effective information, are encoded and transmitted in a first frame 1002, an uppermost bit 904 and the lower 6 bits 910 are encoded and transmitted in a second frame 1004, an uppermost bit 906 and the lower 6 bits 910 are encoded and transmitted in a third frame 1006, and an uppermost bit 908 and the lower 6 bits 910 are encoded and transmitted in a fourth frame 1008. In the next frame 1010, the above-mentioned operations are repeated. Consequently, a period for the TFCI transmission is preferably set as 4 frames.

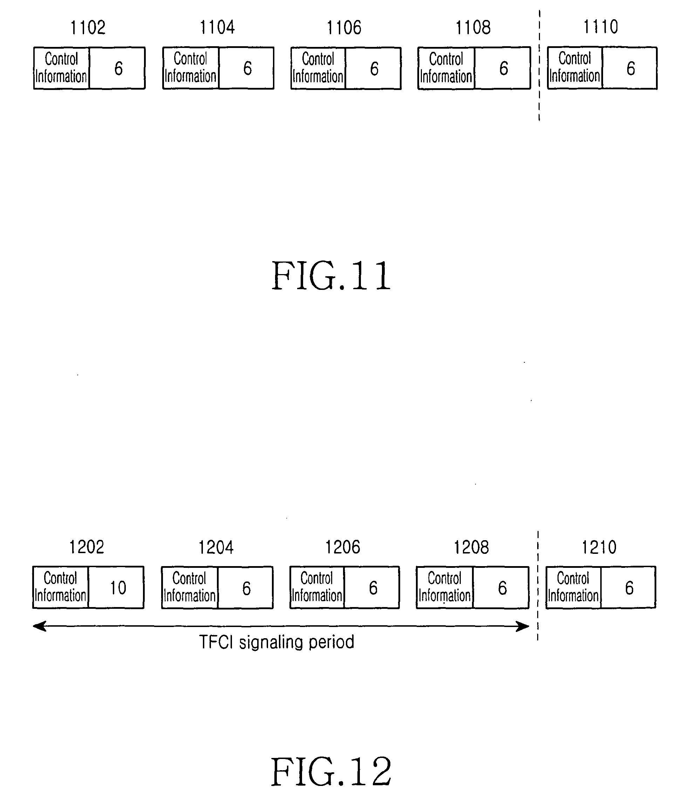

FIG. 11 illustrates another scheme of generating control information in accordance with an embodiment of the present invention.

As described in connection with FIG. 9, information on the upper 4 bits 902 to 908 is not separately transmitted, but only the lower 6 bits 910 are encoded and transmitted in a first to a fourth frame 1102 to 1108. This is valid on the assumption that the Node B has initially assign the Node B pointer to the UE and thus can sufficiently estimate the information on the upper 4 bits of the TFCI transmitted by the UE. In a particular case, the information on the upper 4 bits may be separately transmitted to the Node B.

FIG. 12 illustrates another further scheme of generating control information in accordance with an embodiment of the present invention.

Referring to FIG. 12, all of 10 bits 902 to 910 expressing the TFCI are transmitted in a first frame 1202 while ineffective information, that is, upper 4 bits 902 to 908, and effective information, that is, lower 6 bits 910, are distinguished from each other. During a second to a fourth frame 1204 to 1208, only the lower 6 bits 910 are transmitted. In next frame 1210, all of the 10 bits expressing the TFCL are transmitted again and the same operation as described above is periodically repeated. That is, a period of this data rate scheduling is preferably 4 frames.

It is obvious that dividing the control information into the effective information and the ineffective information as described in this embodiment may vary with various parameters such as user's setting, changing of a scheduling method, etc., and a period of the TFCI transmission may also vary with such parameters or combination thereof.

Although a channel through which the TFCI is transmitted is not definitely stated, control information including the TFCI may be transmitted through E-DPCCH for supporting E-DPDCH. For reference, a structure of the E-DPCCH can be estimated through DPCCH for supporting DPDCH, HS-DPCCH for supporting HS-PDSCH or the like. However, since the present invention aims at the transmission of the TFCI, control information other than the TFCI is not mentioned. Furthermore, it is obvious that the TFCI proposed in embodiments of the present invention may be transmitted through any other channels, which has been already defined in 3GPP standards or will be considered in future.

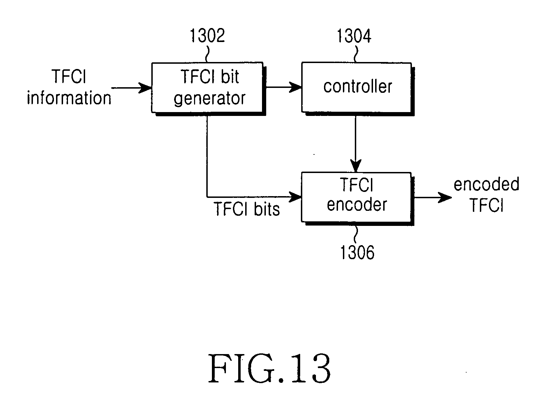

FIG. 13 is a block diagram for illustrating a transmission structure of a UE for supporting embodiments of the present invention.

Referring to FIG. 13, a UE selects an optimal TFC in consideration of a TFCS transmitted from a Node B, buffer occupancy, maximum transmission power and a Node pointer B, and transmits information on the selected TFC to a TFCI generator 1302. The TFCI generator 1302 generates TFCI bits according to embodiments of the present invention under the control of a controller 1304, and outputs the generated TFCI bits to an encoder 1306. The TFCI encoder 1306 executes encoding according to a control signal of the controller 1304, outputs the encoded TFCI and transmits the outputted TFCI to the Node B. Block coding is usually used in the TFCI encoder 1306.

In embodiments of the present invention, as described above, the UE can transmit information on a UE pointer to the Node B using a transmission period longer than the TFO transmission period when a UE pointer, which the UE recognizes is different from a UE pointer that the Node B recognizes. That is, by transmitting all information constituting a TFCS, the UE pointer of the UE can be accorded with the UE pointer of the Node B. When the UE requests the Node B to raise data rate and the Node B approved the request of the UE, the Node B can accord the UE pointers of the UE and the Node B by transmitting an updated TFCS.

The embodiments of the present invention can reduce the number of bits expressing a TFCI transmitted from a UE to a Node B, thereby enabling radio resources to be efficiently used. Also, embodiments of the present invention can improve performance of a mobile communication system by transmitting other control information having as many bits as the reduced number of bits.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method for transmitting control information from a user equipment (UE) to a Node B in a mobile communication system including the UE, which transmits data, and the Node B, which restores received data using the control information stored therein, and corresponding to an identifier transmitted by the UE, the method comprising the steps of:

   extracting only usable control information from among the control information under the management of the UE from received data and resetting identifiers corresponding to the respective extracted control information; and
   selecting an identifier corresponding to the control information used for the data transmission from among the reset identifiers and transmitting the selected identifier.

2. A method as claimed in claim 1, wherein the number of bits of the reset identifier is reduced as compared with that of the previous identifier.

3. A method as claimed in claim 2, wherein the received data is restored using control information corresponding to the received and reset identifier which has been already known.

4. A method as claimed in claim 2, wherein if the number of bits of the extracted control information is larger than that of identifiers to be reset, identifiers corresponding to the extracted control information are reset in consideration of frequency of use of the control information.

5. A method as claimed in claim 1, wherein the control information is information regarding the data rate of transmission data.

6. A method for transmitting control information from a user equipment (UE) to a Node B in a mobile communication system including the UE, which transmits data, and the Node B, which restores received data using the control information stored therein, and corresponding to an identifier transmitted by the UE, the method comprising the steps of:

   dividing the respective identifiers corresponding to the control information to be transmitted into a section, which is changed and then transmitted, and a section, which is transmitted without changing; and transmitting only the changed section accompanied with the identifiers corresponding to the control information to be transmitted.

7. A method as claimed in claim 6, wherein the section which is changed and then transmitted constitutes the identifiers and is lower bits of bits expressing the control information.

8. A method as claimed in claim 7, wherein if the identifier corresponding to the control information is changed, all of identifiers corresponding to the control information are transmitted.

9. An apparatus for transmitting control information from user equipment (UE) to a Node B in a mobile communication system including the UE which transmits data and the Node B which restores received data using the control information stored therein and corresponding to an identifier transmitted by the UE, the apparatus comprising:

   a Node B; and
   a UE for extracting only usable control information from among the control information under its management, resetting identifiers corresponding to the respective extracted control information, selecting an identifier corresponding to the control information used for the data transmission from among the reset identifiers and transmitting the selected identifier.

10. An apparatus as claimed in claim 9, wherein the number of bits of the reset identifier is reduced as compared with that of the previous identifier.

11. An apparatus as claimed in claim 10, wherein the received data is restored using control information corresponding to the received and reset identifier which is already known.

12. An apparatus as claimed in claim 10, wherein if the number of bits of the extracted control information is larger than the number bits for the identifiers to be reset, the identifiers corresponding to the extracted control information are reset in consideration of frequency of use of the control information.

13. An apparatus for transmitting control information from a UE to a Node B in a mobile communication system including the UE which transmits data and the Node B which restores received data using the control information stored therein and corresponding to an identifier transmitted by the UE, the apparatus comprising:

   the Node B; and
   the UE for dividing the respective identifiers corresponding to the control information to be transmitted into a section which is changed and then transmitted and a section which is transmitted without changing and transmitting only the changed section accompanied with the identifiers corresponding to the control information to be transmitted.

14. An apparatus as claimed in claim 13, wherein the section which is changed and then transmitted constitutes the identifiers and a lower number of bits expressing the control information.

15. An apparatus as claimed in claim 14, wherein if the identifier corresponding to the control information is changed, all of the identifiers corresponding to the control information are to be transmitted.

**16.** A method for transmitting data to a Node B by a user equipment (UE) device, the method comprising the steps of:

receiving information on a location of a Transport Format Combination Set (TFCS), which can be transmitted as fast as possible according to the data transmission, from the UE to the Node B;
assigning offsets to the transmittable TFCS based on the information on the location; and
transmitting the offsets corresponding to the selected TFCS to the Node B based on the quantity of the data and the information on the location.

**17.** A method for transmitting data to a Node B by a user equipment (UE), the method comprising the steps of:

receiving information on a location of a Transport Format Combination Set (TFCS), which can be transmitted as fast as possible according to the data transmission, from the UE to the Node B;
dividing the selected TFCS into effective section and ineffective section based on the quantity of the data and the information on the location; and
assigning the ineffective section to frames and transmitting repeatedly.

100

DATA RATE
(Tx POWER)

| TFC0 |
|---|
| TFC1 |
| TFC2 |
| TFC3 |
| TFC4 |
| TFC5 |
| TFC6 |
| TFC7 |
| TFC8 |
| TFC9 |
| TFC10 |

SELECTED UE TFC (102) ⟶

FIG.1

FIG.2

FIG.3

START ~400

YES

UE pointer j is received by NodeB? ~402

NO

Check BO? ~404

No data

Data

Set parameters BO, Max_Tx_Pwr, Node B pointer, TFCS ~406

END ~426

Calculates required TFC based on BO, Max_Tx_Pwr ~408

TFCi

$i < p$ ? ~410

NO

YES

Send "UP" Rate Request command and Receive Rate Grant command ~412

$i = p$ ? ~414

NO

DOWN

Check RG Msg ~416

KEEP

YES

UP

UE pointer=TFC(p-1) ~418

422~ UE pointer=TFC(p+1)

UE pointer=TFCp ~420

Data transmission with data rate indicated by UE pointer ~424

FIG.4

12

500

DATA RATE
(Tx POWER)

| TFC0 |
| --- |
| TFC1 |
| TFC2 |
| TFC3 |
| TFC4 |
| TFC5 |
| TFC6 |
| TFC7 |
| TFC8 |
| TFC9 |
| TFC10 |

Node B pointer
(assigned to Node B by RNC) (502) →

UE pointer
(assigned to UE by Node B) (504) →

# FIG.5

600

DATA RATE
(Tx POWER)

| TFC0 |
|---|
| TFC1 |
| TFC2 |
| TFC3 |
| TFC4 |
| TFC5 |
| TFC6 |
| TFC7, TFO0 |
| TFC8, TFO1 |
| TFC9, TFO2 |
| TFC10, TFO3 |

Node B pointer
(assigned to Node B by RNC) (602)

UE pointer
(assigned to UE by Node B) (604)

FIG.6

700

DATA RATE
(Tx POWER)

| |
|---|
| TFC0 |
| TFC1 |
| TFC2 |
| TFC3 |
| TFC4 |
| TFC5, TFO0 |
| TFC6, TFO1 |
| TFC7, TFO2 |
| TFC8, TFO3 |
| TFC9 |
| TFC10 |

Node B pointer
(assigned to Node B by RNC) (702)

UE pointer
(assigned to UE by Node B) (704)

FIG.7

800

DATA RATE
(Tx POWER)

| |
|---|
| TFC0 |
| TFC1 |
| TFC2 |
| TFC3 |
| TFC4 |
| TFC5, TFO0 |
| TFC6, TFO1 |
| TFC7, TFO2 |
| TFC8 |
| TFC9 |
| TFC10, TFO3 |

Node B pointer
(assigned to Node B by RNC) (802)

UE pointer
(assigned to UE by Node B) (804)

# FIG.8

902    904    906    908             910

| 1 | 1 | 1 | 1 | 0 | 1 | 0 | 1 | 0 | 1 |
|---|---|---|---|---|---|---|---|---|---|

| 1 | 1 | 1 | 1 | 1 | 1 | 1 | 1 | 1 | 1 |
|---|---|---|---|---|---|---|---|---|---|

# FIG.9

1002       1004       1006       1008       1010

| Control Information | 7 | Control Information | 7 | Control Information | 7 | Control Information | 7 | Control Information | 7 |
|---|---|---|---|---|---|---|---|---|---|

TFCI signaling period

# FIG.10

1102 | 1104 | 1106 | 1108 | 1110

| Control Information | 6 |
| Control Information | 6 |
| Control Information | 6 |
| Control Information | 6 |
| Control Information | 6 |

# FIG.11

1202 | 1204 | 1206 | 1208 | 1210

| Control Information | 10 |
| Control Information | 6 |
| Control Information | 6 |
| Control Information | 6 |
| Control Information | 6 |

TFCI signaling period

# FIG.12

1302                    1304

TFCI
information → TFCI bit
generator → controller

TFCI bits → TFCI
encoder → encoded
TFCI

1306

FIG.13